# EUROPEAN PATENT SPECIFICATION

(11) **EP 1 169 188 B1**
(45) Date of publication and mention of the grant of the patent: **14.06.2006**
(21) Application number: 00916741.2
(22) Date of filing: 19.04.2000
(51) Int. Cl.: B60J 5/04

(54) **DOOR MODULE**
TÜRMODUL
MODULE DE PORTE

(30) Priority: 20.04.1999 US 130138 P
(43) Date of publication of application: 09.01.2002
(73) Proprietor: INTIER AUTOMOTIVE CLOSURES INC., Newmarket, ON L3Y 4X7 (CA)
(72) Inventor: KIREJCZYK, Juliusz, Richmond Hill, Ontario L4C 5N2 (CA)
(74) Representative: Jorio, Paolo
(86) International application number: PCT/CA2000/000412
(87) International publication number: WO 2000/063039

(56) References cited:
- DE-A- 19 653 501
- DE-C- 19 707 850
- US-A- 4 866 883
- US-A- 5 050 350
- US-A- 5 090 158
- US-A- 5 906 072

## Description

### Field of the Invention

The subject invention relates to a carrier plate assembly for a vehicle door, as defined in the preamble of claim 1. The carrier plate assembly is secured to the inner panel to provide selective access to the inner space of the door. A carrier plate of this kind is disclosed in US 5 090 158 A.

### Background of the Invention

Inner and outer panels of a vehicle door are connected together to define a space therebetween for housing various door hardware components. Access to the hardware components for installation and repair is accommodated by the opening in the inner panel. In most instances a carrier plate covers this opening. The carrier plate must be removed from the inner panel for access to this inner space. Examples of such prior assemblies are shown in U.S. Patent Nos. 5,050,350 to Bertolini et al. and 5,090,158 to Bertolini. The removal of the carrier plate is time consuming and labor intensive.

The automotive parts supply industry has been evolving toward the supply of not merely individual parts but the supply of modules. Modules have the advantage of providing a greater number of parts and functionality into a single module while being easier and quicker to install on an assembly line.

Door modules have been proposed which include a carrier plate having a number of hardware components. In order to render the inner space more accessible without totally disconnecting the carrier plate from the inner panel of the door, the entire carrier plate has been hingedly connected to the door panels, as is shown in U.S. Patent Nos. 4,866,883 to Brown et al. and 5,906,072 to Feige et al. The prior art hinged carrier plates are relatively large and are actually the majority of the inner panel of the door itself. The structural integrity of the door is therefore compromised. In addition, the known hinged carrier plates are labor intensive to disconnect.

In addition to the access problem with the prior art assemblies, the carrier plates must be sealed to the inner door panel to prevent moisture from gaining access to the inner space and the hardware disposed therein. Many of the prior art door modules have a disadvantage in that once the module is installed, a separate vapor barrier must be utilized in order to seal the door and maintain a relatively dry environment for the operation of the hardware components of the door.

Accordingly, there is a need for a carrier plate which can be efficiently manipulated to provide access to the interior space of the door while adequately sealing the door to prevent the ingress of moisture.

### Summary of the Invention

The subject invention is an improvement over the prior art carrier plates that are mounted to an inner panel of a vehicle door. The carrier plate assembly includes a main section having at least one mounting area where door hardware is mountable thereon. At least one flap section is connected to the main section by a hinge and is movable about the hinge to provide access behind the inner panel of the door without removing the carrier plate.

Accordingly, the subject invention provides a carrier plate which may be pre-assembled with hardware. The carrier plate has a flap section extending from the main section. The main section may be mounted to the inner door panel while allowing access to the interior by opening the flap section. Once the installation of the carrier plate is complete, the flap section is folded against the inner panel and sealed thereto to hermetically seal the door. In the event the hardware in the inner space of the door must be serviced at a later date, the flap section may be opened without removing the entire carrier plate to gain access to the hardware needing repair.

### Brief Description of the Drawings

Other advantages of the present invention will be readily appreciated as the same becomes better understood by reference to the following detailed examplary description when considered in connection with the accompanying drawings wherein:
Figure 1 is a side elevational view of a vehicle door with a carrier plate assembly of the subject invention shown in phantom;
Figure 2 is a side elevational view of the carrier plate of Figure 1;
Figure 3 is a cross sectional view taken along line 3-3 of Figure 1;
Figure 4 is a cross sectional view taken along line 4-4 of Figure 1;
Figure 5 is a cross sectional view taken along line 5-5 of Figure 1;
Figure 6 is a cross sectional view taken along line 6-6 of Figure 1;
Figure 7 is a partial sectional view of a regulator cable attachment of Figure 6;
Figure 8 is a cross sectional view taken along line 8-8 of Figure 1;
Figure 9 is a partial sectional view of a door module attachment of Figure 8;
Figure 10 is a side elevational view of a vehicle door incorporating an alternative embodiment of the carrier plate assembly of the present invention;
Figure 11 is an exploded perspective view of the alternative carrier plate assembly of Figure 10;
Figure 12 is a perspective view of the alternative carrier plate assembly of Figure 10;
Figure 13 is a fragmentary perspective view of the vehicle door in combination with the alternative carrier plate assembly of Figure 10 and with the an open position shown in phantom;
Figure 14 is a cross sectional view taken along line 14-14 of Figure 10; and
Figure 15 is a cross sectional view taken along line 15-15 of Figure 10.

### Detailed Description of the Preferred Embodiments

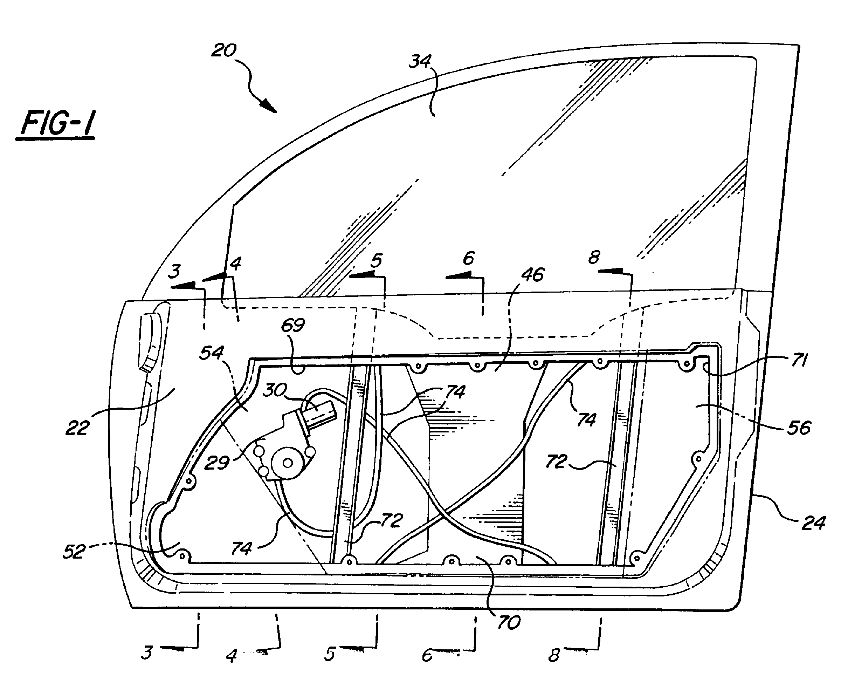

Referring to the Figures, wherein like numerals indicate like or corresponding parts throughout the several views, a vehicle door for hinged mounting on a vehicle body is generally shown at 20 in Figure 1.

The door 20 includes an inner panel 22 and an outer panel 24 connected together about peripheries thereof to define an inner space or cavity therebetween for housing door hardware components. The panels 22, 24 are typically made of sheet metal and are hemmed together about respective peripheries. The inner panel 22 preferably has a pair of openings 69, 71 formed therein for access to the space between the panels 22, 24. A bridge 70 extends vertically between the openings 69, 71 to present a structure for supporting an armrest. The bridge 70 is preferably integral with the inner panel 22. Additionally, the bridge 70 enhances stiffness of the door 20.

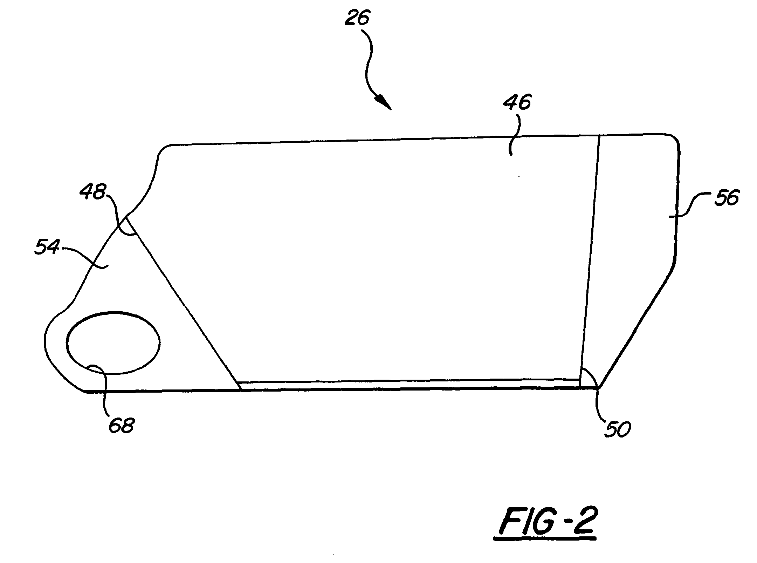

Referring also to Figure 2, a carrier plate assembly, generally indicated at 26, is secured to the inner panel 22 and is sized to cover both of the openings 69, 71. The carrier plate assembly 26 includes a main section 46 which is secured to the inner panel 22 by clips, fasteners, or the like. Preferably, the main section 46 is secured to the inner panel 22 at the bridge 70. The main section 46 has at least one mounting area where door hardware is mountable thereon as is discussed in greater detail below. The main section 46 includes a forward edge 48 and a rearward edge 50. A first flap section 54 extends from the main section 46 at a hinge and is detachably connected to the inner panel 22 for pivotal movement about the hinge. Similarly, a second flap section 56 is connected to the rearward edge 50 by a second hinge. Preferably, the main section 46 and flap sections 54, 56 are integrally formed of an organic polymeric material, i.e. plastic, whereby the hinges are integral living hinges.

The first flap section 54 has a mounting area in the form of hole 68 for mounting a conventional audio speaker 28. Other mounting areas are disposed on the main section 46 of the carrier plate assembly 26 for mounting various door components thereon. It is preferred that substantially all of the hardware components for the door are mounted to the carrier plate assembly 26. The carrier plate assembly 26 of this embodiment is preferably designed of a non-structural material such that the hardware components are transported thereon. The hardware components can be then mounted directly to the inner panel 22 of the door 20 as is discussed below. The carrier plate assembly 26 positions or aligns each of the components at the desired position on the inner panel 22. The non-structural material of the carrier plate assembly 26 is sufficiently supportive to transport the carrier plate assembly 26 with the hardware components thereon.

As illustrated, a pair of rails 72 are mounted to the main section 46. Once the carrier plate assembly 26 is installed, the rails 72 are bolted or otherwise affixed to the inner panel 22 for guiding a window 34 therealong. A window regulator component 29, either manual or power, is also mounted to the main section 46. The window regulator component 29 is also mounted to the inner panel 22 once the carrier plate assembly 26 is mounted to the door 20. The window regulator component 29 includes a series of cables 74 connected between a motor 30 and the window 34 for moving the window 34 along the rails 72. The cables 74 pass between the bridge 70 and the carrier plate assembly 26.

As illustrated, the motor 30 can be mounted forwardly of the rails 72 rather than between the rails 72 as is conventional. The forward mounting of the motor 30 is advantageous in that the mass of the motor 30 is closer to the axis of rotation of the door 20 during opening and closing thereby reducing the inertia of the door 20.

Door latch components, including a latch, an inside release handle and an inside door lock mechanism are mounted on the carrier plate assembly 26.

A bead of sealing compound (not shown) may be disposed about the periphery of the main section 46 and the flap sections 54, 56 for sealing the carrier plate assembly 26 to the inner panel 22, thereby defining a "dry" side on the inner space and a "wet" side on the exterior. The sealing surface of the inner panel 22 follows the shape of the entire carrier plate assembly 26. Any control cables or the like which must pass through the carrier plate assembly panel 26 can be sealed with grommets as is conventional in the art.

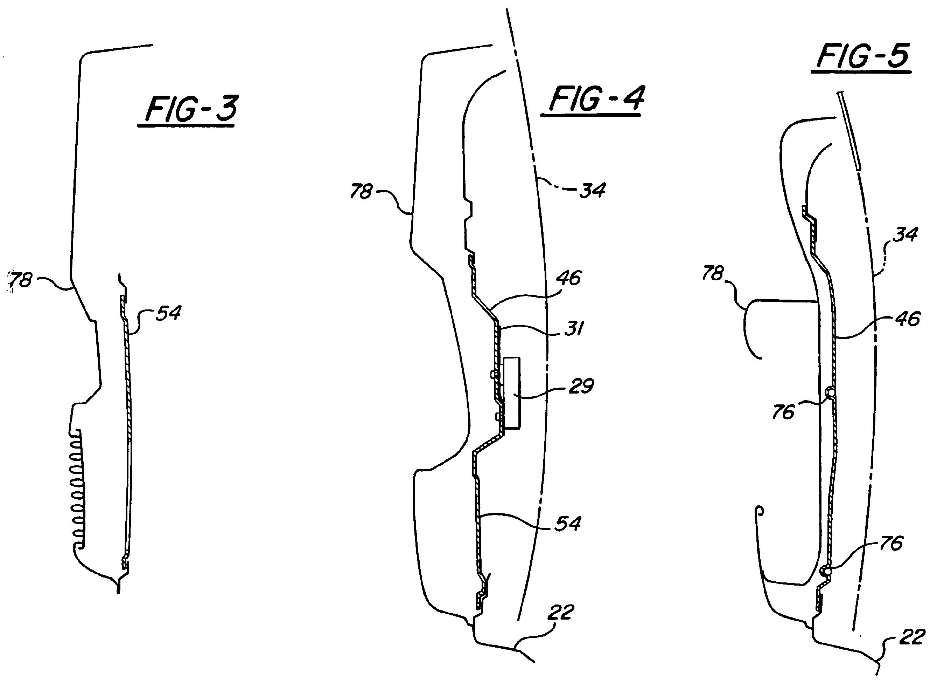

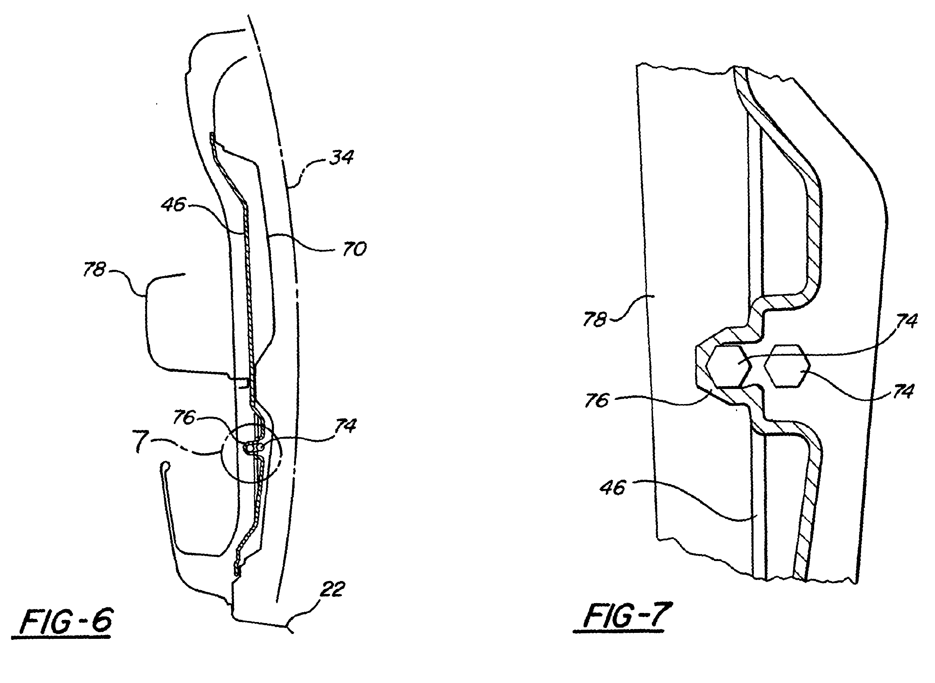

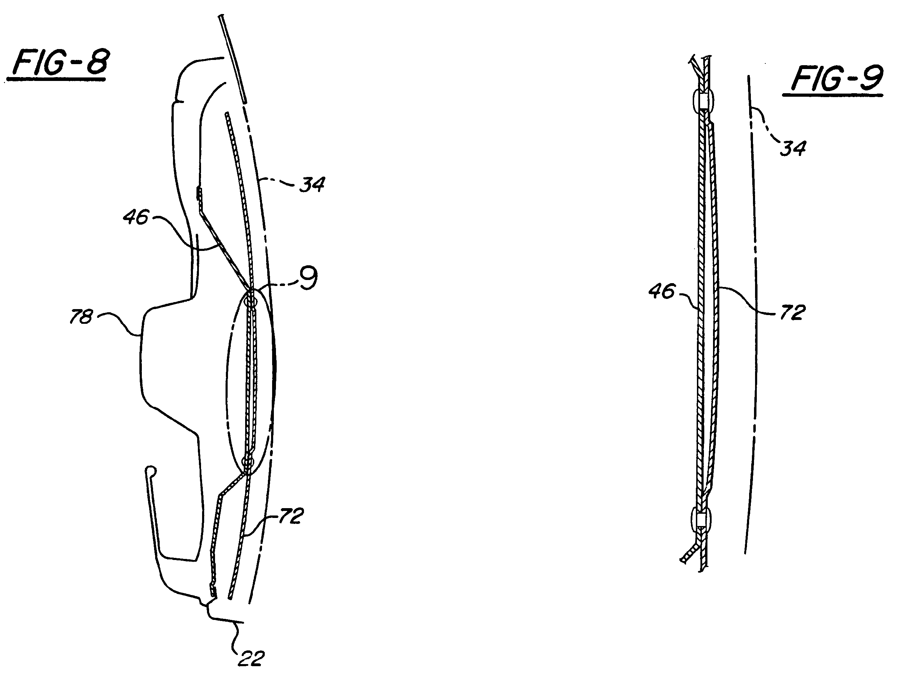

Referring to the sectional views of Figures 3 through 9, the carrier plate assembly 26 is illustrated in greater detail. In particular, Figure 3 further illustrates the first flap section 54 and Figures 4, 5, 6 and 8 further illustrate the main section 46 of the carrier plate assembly 26. As shown in Figure 4, the window regulator component 29 is mounted to the main section 46 by a bracket 31. As shown in Figures 5-7, the main section 46 of the carrier plate assembly 26 also includes integrally molded cable guides 76 for housing the cables 74 that move the window 34. As appreciated, there may also be integrally molded guides for an electrical harness.

The carrier plate assembly 26 is pre-assembled and shipped to the assembly plant in the pre-assembled condition. On the assembly line, the carrier plate assembly 26 is placed on the inner panel 22 with the rails 72 being positioned in the inner space. The carrier plate assembly 26 seals to the continuous sealing surface of the inner panel 22. Fasteners (not shown) attach the main section 46 of the carrier plate assembly 26 to the inner panel 22 in the region of the bridge 70. The door latch 44, which was attached to the carrier plate assembly 26 for shipping, is secured to the end region of door panel 22.

The flap sections 54, 56 are hinged open to provide access to the inner space. Hence, an installer may install the door latch 44 and make all necessary connections with inner and outer door handles through the second or rear flap section 56. Electrical connections to the speaker 28 and the wiring harness 32 can be made through the first or forward flap section 54. The window 34 can be connected to the control cables 74 through both flap sections 54, 56. Once all of the mountings and connections have been made, the flap sections 54, 56 are pivoted about their respective hinges to the closed position overlying and sealing the openings 69, 71, as by a gasket seal or adhesive 60.

An interior door panel 78, best shown in Figures 3-6 and 8, can then be installed to the inner panel 22 to present an aesthetically pleasing covering.

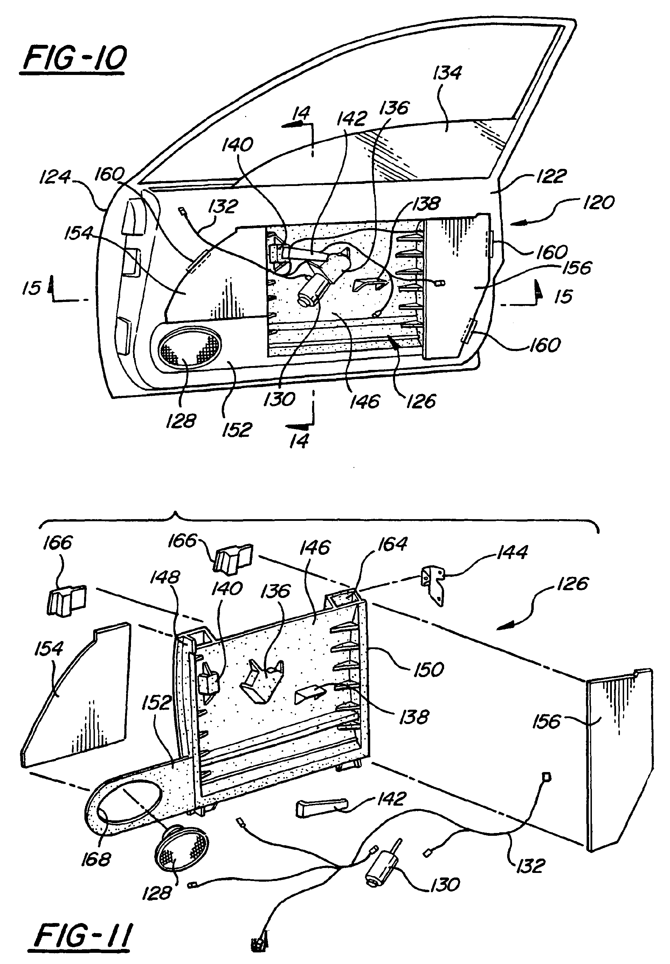

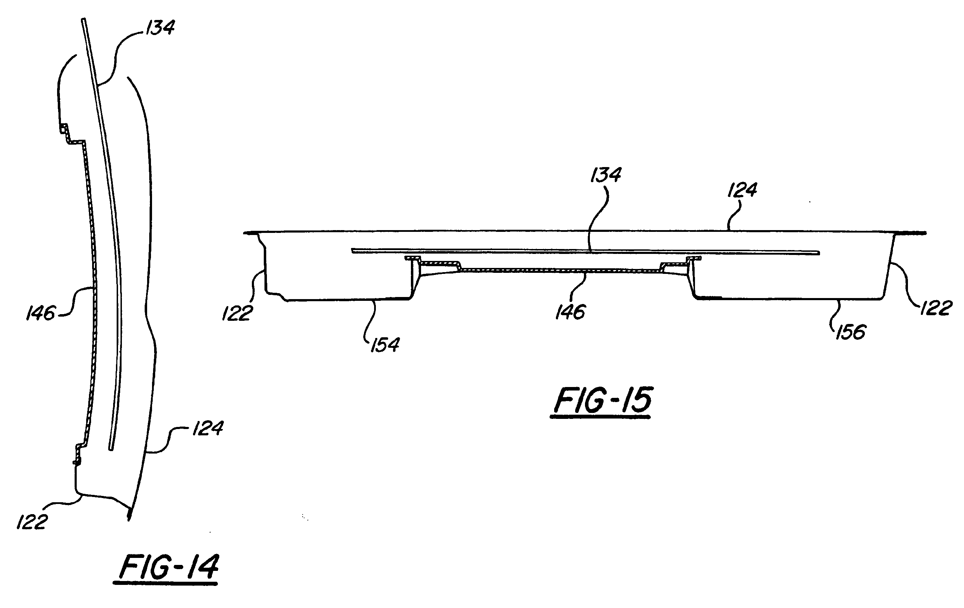

Referring now to Figure 10, an alternative embodiment of the subject invention is illustrated wherein like numerals increased by 100 indicate like or corresponding parts throughout the several views. A door 120 is illustrated having a similar construction as the door 20 of the primary embodiment. In particular, the door 120 includes an inner panel 122 and an outer panel 124 connected together in spaced relationship with one another to define an inner space therebetween for housing door hardware components. The inner panel 122, however, has only one large opening 169 for providing access into the space as is shown in Figure 13.

A carrier plate assembly 126 is formed of a rigid material is illustrated in this embodiment. The rigid carrier plate assembly 126 is designed to support a number of the door hardware components thereon during the shipping of the plate assembly 126. In particular, an audio speaker 128, motor 130, and electrical harness 132 are all illustrated as being supported by the carrier plate assembly 126. The motor 130 and electrical harness 132 are preferably part of a window regulator component 129 for moving a window 134. As appreciated, any hardware or like component which is part of the door 120 may be mounted to the carrier plate assembly 126.

The rigid carrier plate assembly 126 of this alternative embodiment is designed of a structural material such that the hardware components transported thereon remain mounted to the carrier plate assembly 126. Hence, the carrier plate assembly 126 is first installed onto the door 120, the hardware components are then connected, and no additional mounting of the parts is necessary.

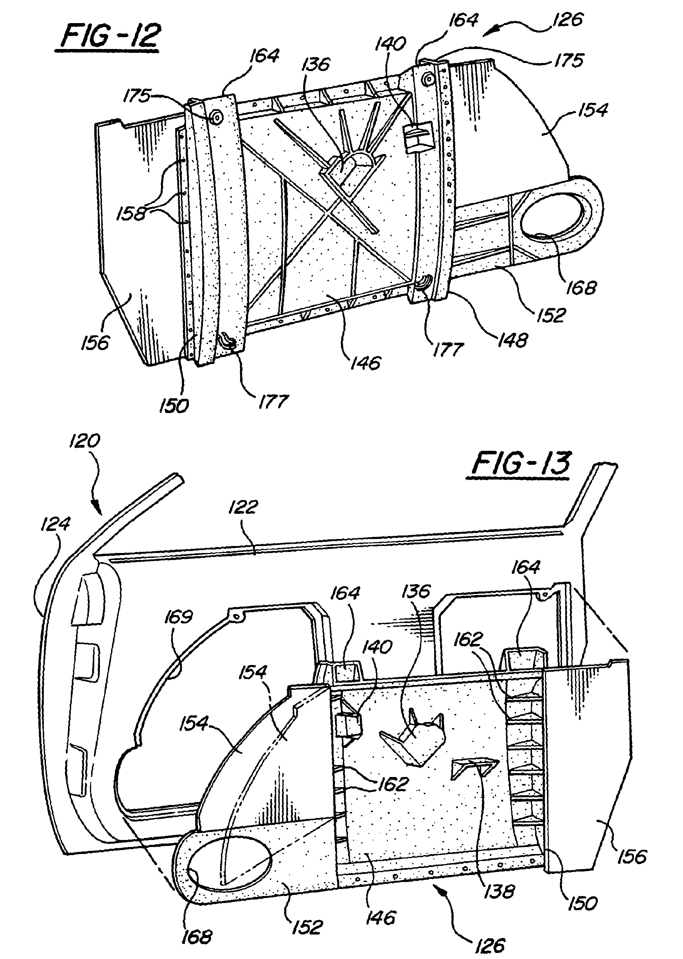

Referring to Figures 11 and 12, the carrier plate assembly 126 is shown in greater detail with the speaker 128, motor 130 and electrical harness 132 spaced therefrom. The carrier plate assembly 126 includes an outer face, as shown in Figure 11, and an inner face, as shown in Figure 12. The speaker 128, motor 130 and electrical harness 132 are preferably mounted to the outer face of the carrier plate assembly 126. Integral pockets and/or mounts 136, 138, 140 are included on the carrier plate assembly 126 for supporting the various hardware components. In particular, the motor 130 is supported by the mount 136. A gearbox (not shown) is disposed within the pocket formed by mount 136 (best shown in Figure 12). The mount 136 also includes a sealed opening for allowing the motor 130 to engage the gearbox. The mount 136 can be designed to directly accommodate the gears of the gearbox thereby allowing a separate gearbox housing to be eliminated. The mount 140 is molded at the desired location to support a door handle mechanism 142. The platform mount 138 is presented to reinforce an armrest (not shown). The electrical harness 132 electrically interconnects the motor 130 and control buttons (not shown). A door latch 144 is connected via a cable to the door handle 142.

As is common with the carrier plate assembly 26 of the first embodiment, the carrier plate assembly 126 includes a main section 146 secured to the inner panel 122 by clips, fasteners, or the like. The main section 146 includes a forward edge 148 and a rearward edge 150 with an arm 152 extending forwardly from the forward edge 148. A first flap section 154 is connected to the main section 146 by a hinge and is detachably connected to the inner panel 122 for movement about the hinge to access the inner space without removing the entire carrier plate assembly 126. Preferably, the first flap section 154 is disposed above the arm 152 and along the forward edge 148. A second flap section 156 is connected to the rearward edge 150 by a second hinge.

The main section 146 and the flap sections 154, 156 of the carrier plate assembly 126 are preferably formed of a rigid material. Even more preferably, the main section 146 and flap sections 154, 156 are formed of an integral organic polymeric material, i.e. plastic. The flap sections 154, 156 are connected to the rigid main section 146 by rivets 158, or the like, as shown in Figure 12. As appreciated, the flap sections 154, 156 may be alternatively adhered to the main section 46 by an adhesive. The flap sections 154, 156 are preferably formed of a soft or malleable material such that a living hinge can be formed on the flap sections 154, 156. In the event the flap sections 154, 156 are of paper board or the like, a moisture impervious layer or sheet (not shown) is adhered thereto to present a moisture barrier.

Tape 160 (shown in Figure 10) or other like adhesive may be employed to secure the flap sections 154, 156 to the inner panel 122. A bead of sealing compound (not shown) may be disposed about the periphery of the main section 146 and the flap sections 154, 156 for sealing the carrier plate assembly 126 to the inner panel 122, thereby defining a "dry" side on the interior of the space and a "wet" side on the exterior. In particular, the carrier plate assembly 126 is sealed to an inner side of the inner panel 122 (best shown in Figure 14).

The rigid main section 146 includes reinforcing ribs 162 on both sides thereof. The main section 146 is generally rectangular and includes two vertically curved channels 164, which support integrally molded cable guides 177 and pulleys 175. The channels 164 define the two curved edges 148, 150 which curvature reflects that of the window 134. Hence, the edges 148, 150 form the rails for window regulator lift plates 166. The integrally molded cable guides 177 and pulleys 175 receive window regulator cables (not shown) for moving the window 134. In particular, the window regulator cables are routed through the guides 177 and pulleys 175 and then attached to the lift plates 166. The arm 152 also has a mount in the form of an oval hole 168 in the main section 146 with the audio speaker 128 disposed in the hole 168.

Figures 14 and 15 illustrate cross-sectional views through the inner 122 and outer 124 panels and the alternative carrier plate assembly 126 of Figure 10.

The carrier plate assembly 126 of this alternative embodiment is pre-assembled and shipped to the assembly plant in a similar pre-assembled condition as the first embodiment. On the assembly line, the carrier plate assembly 126 is placed on the inner panel 122. As discussed above, the carrier plate assembly 126 is sealed to an inner side of the inner panel 122 (best shown in Figure 14). Fasteners (not shown) attach the main section 146 of the carrier plate assembly 126 to the inner panel 122.

The flap sections 154, 156 are hinged open to provide access to the interior space. Hence, an installer may install the door latch 144 and make all necessary mechanical and electrical connections with inner and outer door handles through the second or rear flap section 156. Electrical connections to the speaker 128 and the wiring harness 132 can be made through the first or forward flap section 154. The window 134 can be connected to the lift plates 166 through both flap sections 154, 156. As discussed above, no additional mounting of the hardware components is necessary. Once all of the connections have been made, the flap sections 154, 156 are pivoted about their respective hinges to the closed position overlying and sealing the opening 169.

The flaps sections 154, 156 are sealed to the inner panel 122 to seal the periphery of the carrier plate assembly 126. An interior door panel, not shown but similar to the door panel of the primary embodiment, can then be installed to the inner panel 122 to present an aesthetically pleasing covering.

Many modifications and variations of the present invention are possible in light of the above teachings. The invention may be practiced otherwise than as specifically described within the scope of the appended claims.

## Claims

1. A carrier plate assembly (26, 126) adapted to be secured to an inner panel (22, 122) of a vehicle door (20, 120), said assembly (26, 126) comprising;
a main section (46, 146) having at least one mounting area where door hardware is mountable thereon, and
at least one flap section (54, 154);
**characterized in that** said flap section (54, 154) extends from said main section (46, 146) and is pivotally connected to the main section (46, 146) for providing access behind the inner panel (22, 122) of the door (20, 120).

2. An assembly as set forth in claim 1 wherein said main section (46, 146) and said flap section (54, 154) are integrally connected together by a living hinge.

3. An assembly as set forth in claim 1 wherein said main section (46, 146) is formed of a rigid material.

4. An assembly as set forth in claim 3 wherein said flap section (54; 156) consists of a different material than said main section (46, 146)..

5. An assembly as set forth in claim 3 wherein said flap section (154) is formed of a moisture impervious material.

6. An assembly as set forth in claim 3 wherein said main section (146) includes integral channels (164) defining a pair of guides for regulating movement of a window (134),

7. An assembly as set forth in claim 6 wherein said channels (164) include lift plates (166) in sliding engagement within said channels (1,64) for supporting the window (134).

8. An assemble as set forth in claim 3 wherein said main section (146) further includes reinforcing ribs (162).

9. An assembly as set forth in claim 3 wherein said main section (146) includes integral pockets (136, 138, 140) for supporting various hardware components.

10. An assembly as set forth in claim 1 further including adhesive tape (160) for securing said flap section (154) to the inner panel (122).

11. An assembly as set forth in claim 1 wherein said mounting area comprises a hole (163) for receiving an audio speaker (128).

12. An assembly as set forth in claim 3 wherein said main section (146) includes a forward edge (148) and a rearward edge (150) and an arm (152) extending forwardly from said forward edge (148), said flap section (154) being disposed above said arm (152) and along said forward edge (148).

13. An assembly as set forth in claim 12 wherein said mounting area comprises a hole (168) disposed in said arm (152) for receiving an audio speaker (128).

14. Assembly as set forth in claim 12 including a second flap section (156) connected to said rearward edge (150) by a second hinge.

15. An assembly as set forth in claim 2 wherein said main section (46) includes a forward edge (48) and a rearward edge (50), said hinge for said flap section (54) being disposed along said forward edge (48), and including a second flap section (56) integrally connected to said rearward edge (50) by a second living hinge.

16. An assembly as set forth in claim 15 wherein said main section (46) has an integrally molded cable guide (76) adapted to receive a cable (74) of a window regulator (29).

17. An assembly as set forth in claim 16 wherein said main section (46) has a window regular assembly (29) mounted thereto.

## Patentansprüche

1. Trägerplattenanordnung (26, 126), geeignet zur Befestigung an einer Innenplatte (22, 122) einer Fahrzeugtür (20, 120), mit:
- einem Hauptabschnitt (46, 146) mit zumindest einem Montagebereich, in dem Türen-Hardware daran montierbar ist, und
- zumindest einem Klappenabschnitt (54, 154),
**dadurch gekennzeichnet, dass** sich der Klappenabschnitt (54, 154) von dem Hauptabschnitt (46. 146) aus erstreckt und schwenkbar mit dem Hauptabschnitt (46. 146) zum Schaffen eines Zugangs hinter die Innenplatte (22, 122) der Tür (20, 120) verbunden ist.

2. Anordnung nach Anspruch 1, wobei der Hauptabschnitt (46, 146) und der Klappenabschnitt (54, 154) integral durch ein Filmscharnier miteinander verbunden sind.

3. Anordnung nach Anspruch 1, wobei der Hauptabschnitt (46, 146) aus einem steifen Material gebildet ist.

4. Anordnung nach Anspruch 3, wobei der Klappenabschnitt (54, 156) aus einem anderen Material als der Hauptabschnitt (46, 146) besteht.

5. Anordnung nach Anspruch 3, wobei der Klappenabschnitt (154) aus einem feuchtigkeitsundurchlässigen Material gebildet ist.

6. Anordnung nach Anspruch 3, wobei der Hauptabschnitt (146) integrale Kanäle (164) umfasst, die ein Paar von Führungen zur Lenkung der Bewegung eines Fensters (134) festlegen.

7. Anordnung nach Anspruch 6, wobei die Kanäle (164) Hubplatten (166) in gleitendem Eingriff mit den Kanälen (164) zum Tragen des Fensters (134) einschließen.

8. Anordnung nach Anspruch 3, wobei der Hauptabschnitt (146) ferner Verstärkungsrippen (162) timfasst.

9. Anordnung nach Anspruch 3, wobei der Hauptabschnitt (146) integrale Taschen (136, 138, 140) zum Tragen von verschiedenen Hardware-Komponenten umfasst.

10. Anordnung nach Anspruch 1. ferner mit einem Klebeband (160) zum Befestigen des Klappenabschnitts (154) an der Innenplatte (122).

11. Anordnung nach Anspruch 1, wobei der Montagebereich ein Loch (168) zur Aufnahme eines Lautsprechers (128) umfasst.

12. Anordnung nach Anspruch 3, wobei der Hauptabschnitt (146) eine Vorderkante (148), eine Hinterkante (150) und einen Arm (152) umfasst, der sich nach vorne von der Vorderkante (148) erstreckt, wobei der Klappenabschnitt (154) über dem Arm (152) und entlang der Vorderkante (148) angeordnet ist.

13. Anordnung nach Anspruch 12, wobei der Montagebereich ein Loch (168) umfasst, das in dem Arm (152) zur Aufnahme eines Lautsprechers (128) angeordnet ist.

14. Anordnung nach Anspruch 1.2, mit einem zweiten Klappenabschnitt (156), der mit der Hinterkante (150) durch ein zweites Scharnier verbunden ist.

15. Anordnung nach Anspruch 2, wobei der Hauptabschnitt (46) eine Vorderkante (48) und eine Hinterkante (50) umfasst, das Scharnier für den Klappenabschnitt (54) ist entlang der Vorderkante (48) angeordnet, und mit einem zweiten Klappenabschnitt (56), der integral mit der Hinterkante (50) durch ein weites Filmschajmier verbunden ist.

16. Anordnung nach Anspruch 15, wobei der Hauptabschnitt (46) eine integral geformte Kabelführung (76) aufweist, die zur Aufnahme eines Kabels (74) einer Fensterstellvorrichtung (29) geeignet ist.

17. Anordnung nach Anspruch 16, wobei der Hauptabschnitt (46) eine an ihn montierte Fensterstellanordnung (29) aufweist.

## Revendications

1. Ensemble de plaques de support (26, 126) destiné à être fixé à un panneau intérieur (22, 122) d'une portière de véhicules (20, 120), ledit ensemble (26, 126) comprenant :
une section principale (46, 146) comportant au moins une zone de montage dans laquelle du matériel de portière peut être monté, et
au moins une section mobile (54, 154) ;
**caractérisé en ce que** la section mobile (54, 154) s'étend de ladite section principale (46, 146) et est reliée à pivotement à la section principale (46, 146) afin de pouvoir accéder derrière le panneau intérieur (22, 122) de la portière (20, 120).

2. Ensemble selon la revendication 1, dans lequel ladite section principale (46, 146) et ladite section mobile (54, 154) sont reliées solidairement ensemble au moyen d'une charnière.

3. Ensemble selon la revendication 1, dans lequel ladite section principale (46, 146) est formée à partir d'un matériau rigide.

4. Ensemble selon la revendication 3, dans lequel ladite section mobile (54, 156) est formée à partir d'un matériau différent de celui de ladite section principale (46, 146).

5. Ensemble selon la revendication 3, dans lequel ladite section mobile (154) est formée à partir d'un matériau imperméable à l'humidité.

6. Ensemble selon la revendication 3, dans lequel ladite section principale (146) inclut des canaux intégrés (164) définissant une paire de guides destinés à réguler le mouvement d'une vitre (154).

7. Ensemble selon la revendication 6, dans lequel lesdits canaux (164) incluent des plaques de levage (166) en engagement à glissement à l'intérieur desdits canaux (164) afin de supporter la vitre (134).

8. Ensemble selon la revendication 3, dans lequel ladite section principale (146) inclut en outre des nervures de renforcement (162).

9. Ensemble selon la revendication 3, dans lequel ladite section principale (146) inclut des poches intégrées (136, 138, 140) destinées à supporter divers composants d'équipements.

10. Ensemble selon la revendication 1, incluant en outre une bande adhésive (160) destinée à fixer ladite section mobile (154) au panneau intérieur (122).

11. Ensemble selon la revendication 1, dans lequel ladite zone de montage comprend un trou (163) destiné à recevoir un haut-parleur (128).

12. Ensemble selon le revendication 3, dans lequel ladite section principale (146) inclut un bord avant (148) et un bord arrière (150) et un bras (152) s'étendant vers l'avant depuis ledit bord avant (148), ladite section mobile (154) étant disposée au-dessus dudit bras (152) et le long dudit bord avant (148).

13. Ensemble selon la revendication 12, dans lequel ladite zone de montage comprend un trou (168) ménagé dans ledit bras (152) et destiné recevoir un haut-parleur (128).

14. Ensemble selon la revendication 12 incluant une deuxième section mobile (156) raccordée audit bord arrière (150) au moyen d'une deuxième charnière.

15. Ensemble selon la revendication 2, dans lequel ladite section principale (46) inclut un bord avant (48) et un bord arrière (50), ladite charnière destinée à ladite section mobile (54) étant disposée le long dudit bord avant (48), et incluant une deuxième section mobile (56) reliée solidairement audit bord arrière (50) au moyen d'une deuxième charnière.

16. Ensemble selon la revendication 15, dans lequel ladite section principale (46) comporte un guide de câble moulé intégralement (76) destiné à recevoir un câble (74) d'un vérin de vitre (29).

17. Ensemble selon la revendication 16, dans lequel ladite section principale (46) comporte un ensemble de vérins de vitre (26) montés sur ladite section principale.
